# EUROPEAN PATENT APPLICATION

(11) **EP 1 669 917 A1**
(43) Date of publication of application: **14.06.2006**
(21) Application number: 05026181.7
(22) Date of filing: 01.12.2005
(51) Int. Cl.: G06Q 10/00

(54) **Method and system for communicating delivery information in a mail and parcel distribution system**

(30) Priority: 03.12.2004 US 3141
(71) Applicant: PITNEY BOWES, INC., Stamford, CT 06926-0700 (US)
(72) Inventor: Ryan, Frederick W. Jr., Oxford Connecticut 06478 (US)
(74) Representative: HOFFMANN EITLE

(57) **Abstract**

A method and system facilitating the delivery of a mailpiece in a mail distribution system. The method includes the steps of: (i) reading a mailpiece identifier, disposed in combination with the mailpiece, upon initial mailpiece processing, (ii) developing tracking information corresponding to various mailpiece processing activities in the mail distribution system; (iii) producing a delivery report based upon the tracking information, and (iv) communicating the delivery report to the recipient of the mailpiece. The method may further provide contact information in combination with the mailpiece to facilitate communication between a delivery agent and the mailpiece recipient. The contact information can be used to communicate mailpiece handling information as such information is developed or upon delivery of the mailpiece. Moreover, the method may include the steps of receiving instructions from the recipient regarding changes in the handling of the mailpiece and having the instructions executed by the delivery agent. The method and system can employ any one of a variety of electronic communication networks (e.g., e-mail, Internet, facsimile and telephone) to communicate the delivery report.

## Description

This invention relates to mail distribution systems and, more particularly to a new and useful method and system for communicating delivery information, i.e., tracking information, of a mailpiece to its recipient during handling by a delivery agent/mail carrier.

A variety of methods are currently employed for tracking the delivery/handling of mailpieces (e.g., letters or parcels) as they progress from sender to recipient. Generally, such methods are capable of providing information concerning the current state or location of a mailpiece. That is, a recipient, anxious to receive a particular parcel, can be provided information concerning its whereabouts, and can either be pleased or concerned about its current state and/or location. Consequently, it will be appreciated that this tracking method has limited utility and offers little more than a degree of comfort to the recipient that a parcel is on its way and/or has not been misplaced.

Furthermore, current methods require that the sender affix a tracking number to a mailpiece prior to processing by the delivery agent As a consequence, if a sender fails to affix such tracking number to the mailpiece, neither the sender nor recipient has any means to track the handling of the mailpiece within the mail distribution system.

As a general rule, handling instructions for a particular mailpiece are predetermined at the time of entry into a mail distribution system. The sender and/or has but a few options available concerning the handling of a mailpiece, most options being generally related to the speed of delivery, e.g., overnight, two-day priority, etc. The recipient, on the other hand, has no control in connection with the handling of a mailpiece, other than to make a request to the sender that they use a particular mailing/handling method (e.g., use of a preferred delivery agent, expedited delivery, etc.) If the sender misinterprets or fails to honor the request of the recipient, the recipient has no recourse to override or change the mailing/handling method.

Yet another, more recent concern, relates to the information available in connection with the route that a particular mailpiece takes, or has taken, while in transit from a sender to a recipient/addressee. It will be sadly recalled that immediately following the events of September 11, 2001 in New York City, mailpieces were contaminated with certain biological agents (e.g., Anthrax). Knowledge of the path that such mailpieces had taken became critically important to the safety of those who came in contact with the contaminated mailpieces. Unfortunately, the lack of a robust tracking system made the task of identifying mailpieces and/or mail stations, which were potentially tainted, painfully difficult. Had a tracking system been in place at the time of these attacks, it may have served to avoid a greater number of injuries and, perhaps, fatalities. That is, a greater number of mailpieces may have been identified/captured before other mailpieces/mail stations were cross contaminated.

A need, therefore, exists for a method which provides a robust channel of communication between the delivery agent and the recipient to provide greater control, flexibility and/or agility with respect to the delivery of a mailpiece.

A method and system is provided for facilitating the delivery of a mailpiece in a mail distribution system. The method includes the steps of: (i) reading a mailpiece identifier, disposed in combination with the mailpiece, upon initial mailpiece processing, (ii) developing tracking information corresponding to various mailpiece processing activities in the mail distribution system; (iii) producing a delivery report based upon the tracking information, and (iv) communicating the delivery report to the recipient of the mailpiece. The method may further provide contact information in combination with the mailpiece to facilitate communication between a delivery agent and the mailpiece recipient and, communicate the tracking information to the recipient as such information is developed. Moreover, the method may include the steps of receiving instructions from the recipient regarding changes in the handling of the mailpiece and having the instructions executed by the delivery agent.

Additional aspects and advantages of the invention will be set forth in the description that follows and, in part, will be readily apparent from the description, or may be learned by practice of the invention. Various features and embodiments are further described in the following figures, detailed description and claims.

The accompanying drawings illustrate presently preferred embodiments of the invention, and together with the general description given above and the detailed description given below, serve to explain the principles of the invention. As shown throughout the drawings, like reference numerals designate like or corresponding parts.

FIG. 1 is a schematic of mail distribution system illustrating the delivery of a mailpiece in accordance with the teachings of the present invention.

FIG. 2 is a plan view of a mailpiece including additional contact information to facilitate communication between the delivery agent and the recipient of the mailpiece.

FIG. 3 depicts a table for illustrating an exemplary delivery report developed from mailpiece tracking information.

FIG. 4 is a flow diagram illustrating the method steps taken according to the preferred and alternate embodiments of the invention.

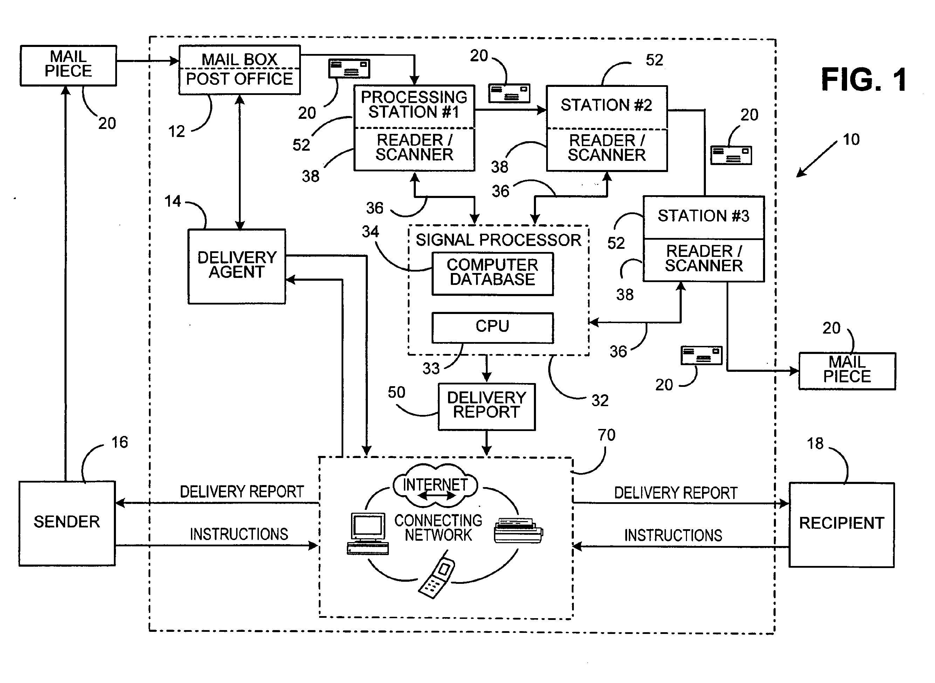

Referring to Fig. 1, a mail distribution system 10 is schematically depicted wherein a mailpiece 20 enters the mail distribution system 10 in any one of a variety of conventional methods such as by way of a mailbox or post office 12 etc. In the context used herein and in the appended claims, the term "mailpiece" includes letters and parcels carried by a delivery agent 14, and any other physical item appointed for delivery to an addressee or recipient. A "delivery agent" is any governmental agency/authority (e.g., United States Postal Service (USPS)) or commercial entity (e.g., FedEx), responsible for the delivery of a mailpiece.

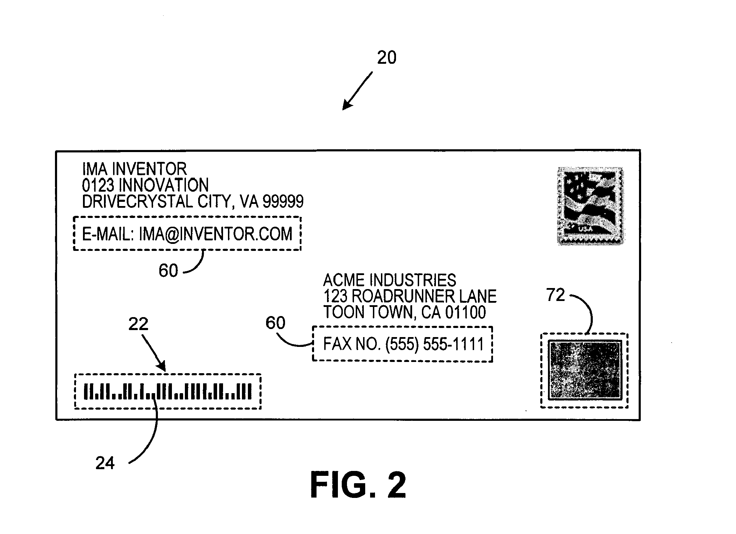

In FIGS. 1 and 2, the mailpiece 20 includes a mailpiece identifier 22 which may be placed at any convenient location on the mailpiece 20. In the preferred embodiment, the delivery agent 14 assigns or attaches the mailpiece identifier 22 to the mailpiece 20 using any of a variety of conventional techniques. For example, the delivery agent 14 may employ a fluorescent barcode (in FIG. 2 the ID tag is shown on the front of the mailpiece for convenience of illustration) on an incoming mailpiece 20 for its unique identification. Alternatively, an existing or newly generated code (e.g., planet code) may be printed or otherwise affixed to the mailpiece 20 for the purpose of mailpiece identification. In some embodiments, a mailpiece identification number and/or a mailpiece category identification number may be printed on the mailpiece in the form of alphanumeric characters instead of or in addition to the barcode 24. In the context used herein, "printed" or "affixed" to the mailpiece 20 means any suitable method of combining the mailpiece identifier 22 with the mailpiece 20.

While, in the preferred embodiment, the mailpiece identifier 22 is assigned by the delivery agent 14 at the time of entry into the mail distribution system 10 (e.g., at the first automated processing station), the identifier 22 may be printed or otherwise affixed to the mailpiece 10 prior to entry into the mail distribution system 10. For example, a sender 16 of the mailpiece 10 may provide an identification code (not shown) to be used by the delivery agent 14 for the purposes of mailpiece identification. Of course, such identification indicia/code would necessarily be coordinated with the delivery agent 14 for consistency with the internal methods employed for identifying and tracking mailpieces. Such coordination can be explicit, e.g., the sender requesting a serial number from the delivery agent for each mailpiece, managed by the sender, i.e., the sender is assigned a range of numbers by the delivery agent, or automated wherein a meter creates an indicia using algorithms to develop a unique identification code for each mailpiece.

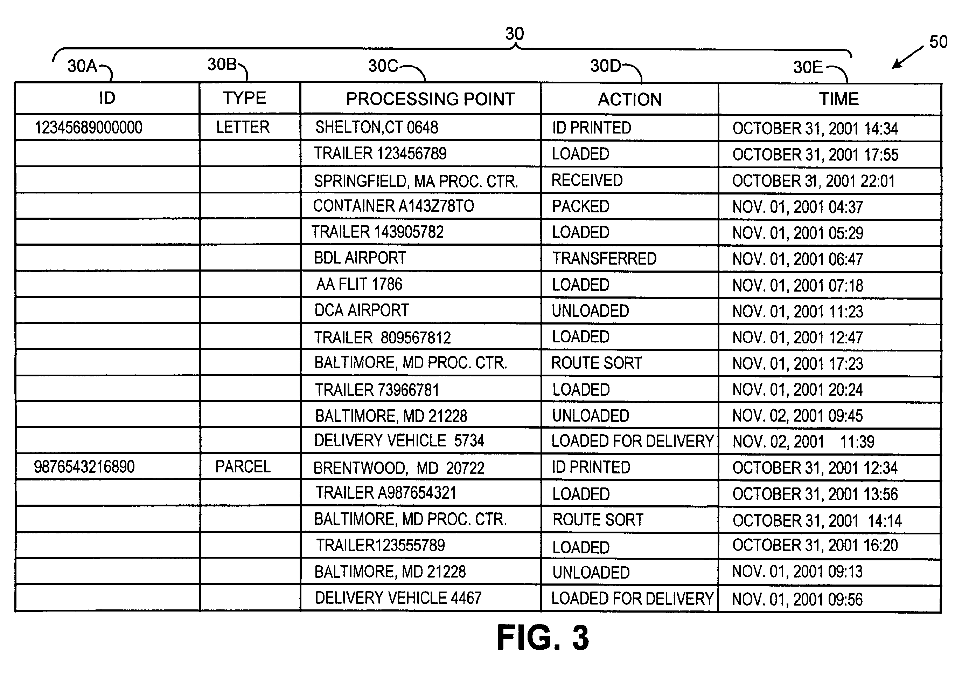

Using the mailpiece identifier 22, the delivery agent 14 develops tracking information as the mailpiece 20 flows or progresses through the mail distribution system 10. In the context used herein, "tracking information" is any data related to the time, location and/or action(s) taken with respect to the mailpiece 20. More specifically, and referring additionally to FIG. 3, tracking information 30 has been captured and organized in tabular format. It will be appreciated that various methods are available for capturing such tracking information 30, however, in the preferred embodiment, such information is developed using a data processor (e.g., CPU 33) responsive to identification signals 36 issued by a mail reader/scanner 38. The processor 32 compares the signal data (indicative of each unique mailpiece 20) against a computer database 34 i.e., an information database of items processed by the mail distribution system 10 over a given period of time (e.g., the last month). Information related to a mailpiece in the computer database 34 is preferably created/updated when the mailpiece is initially processed in the mail distribution system 10 and further populated as the mailpiece is handled at subsequent stations. Information related to a mailpiece may also be created/updated based upon information received from the sender (e.g., a statement of mailing electronically transmitted to a carrier prior to mail induction).

For example, if the mailpiece identifier 22 is a barcode 24 (FIG. 2), then a barcode scanner or reader 38 in combination with the data processor 32 may be employed to capture desired tracking information 30. As illustrated in FIG. 3, a mailpiece ID code 30A (see the first column of the table) is one of the elements of the desired tracking information 30. If no ID code has been affixed by the sender the data processor 32 may generate an ID code which may be affixed to the mailpiece by a processing station 52 (preferably the initial processing station). The ID code is used subsequently for mailpiece identification as the mailpiece 10 progresses in the mail distribution system 10. In the third and fifth columns, time and location data 30C and 30E, respectively, i.e., data relating to the time of arrival and location of the mailpiece 20, respectively, are recorded. Preferably, the tracking system will, at minimum, track these two data elements. In the second and fourth columns, additional data elements 30B, 30D may be recorded such as the mail type 30B, e.g., letter, parcel, etc., and/or action being taken with respect to the mailpiece 20, handling data 30D. Automated electronic tracking devices such as the type required above are well known in the art and, for conciseness of description, will not be discussed in greater detail herein. Some examples of suitable tracking systems include ID Tag tracking systems in use by many posts as specified in UPU standard S-18, the Lockheed-Martin (Owego, NY, USA) Wide Field of View cameras installed by the USPS to enable the USPS CONFIRM service, and similar systems in use by private carriers.

The tracking information 30 obtained may be used to generate a delivery report 50 in any desired format including the format illustrated in FIG. 3. As used herein and in the appended claims, the phrase "delivery report" is any compilation of tracking information 30 for a given mailpiece 20, whether or not the mailpiece 20 has been delivered to the addressee or recipient. Hence, a delivery report 50 may be a listing of the time and location that a mailpiece 20 has been handled within the mail distribution system 10 at any particular point in time, i.e., regardless of whether the mailpiece 20 has completed its progress within the mail distribution system 10. For simplicity delivery report 50 has been illustrated for a single mailpiece. It should be noted that a delivery report may contain listings for one or more mailpieces. This might be particularly useful in a corporate environment where mailpieces are delivered in trays. A delivery report for each tray could be provided enabling the corporate mailroom to determine if any tray should be quarantined due to potential contamination of any the mailpieces in the tray.

In a first embodiment of the invention, the delivery report 50 can be sent/communicated to the intended recipient 18 in advance of the physical delivery of the mailpiece 20 to the addressee or accompany the delivery thereof to its recipient. Accordingly, the recipient will be fully cognizant of the handling of any particular mailpiece 20. For example, if the mailpiece 10 has been handled at a particular mail station 52, e.g., one that has been identified as being contaminated by a hazardous material, then the recipient 18 can take the necessary precautions concerning the subsequent handling of the mailpiece 20, e.g., to refuse delivery.

Alternatively, and in accordance with another embodiment of the invention, the delivery report 50 can be communicated to the intended recipient 18 at any particular time or point in the travel of the mailpiece 20. In this embodiment, the mailpiece 20 may include contact information 60 (see Fig. 2) to apprize the recipient of the current status of the mailpiece 20. Such contact information is preferably one which employs an electronic communication device or network 70 for conveying the delivery report 50. For example, the contact information 60 can be associated with any one of a variety of electronic communication devices 70 and may include one or a combination of the following: e-mail address, Internet address, mail meter identifier, telephone number and facsimile number. It should be noted that this contact information may be derived from other information present on the mailpiece (e.g., meter serial number, delivery point zip code, CONFIRM subscription number, permit mail number, etc.).

In addition to the methods described above for providing such information to the recipient, Internet communication can also be a viable method for conveying the delivery report 50. For example, the delivery report 50 can be broadcast on an Internet web site and made available to the recipient. In view of the flexibility provided by the Internet, the sender 16 could also authorize others to view the delivery report 50, hence, the term "recipient" includes the addressee of the mailpiece 20 and any other viewer authorized to access, at minimum, the delivery report 50. In this embodiment, the contact information 60 may be used to advise a recipient concerning the steps necessary to access the delivery report 50 on the Internet. For example, contact information 60 in the form of an e-mail communication could be used to send the recipient 18 Internet access information such as the Internet address and login information (e.g., user ID and password). As such, the recipient 18 could, at any convenient time, access the Internet web site and view the delivery report 50. Hence, for all intents and purposes, the tracking information 30 contained in the delivery report 50 could be made available to the recipient instantaneously or in real-time.

Upon receipt or viewing of the delivery report 50, the recipient 18 could change the handling of the mailpiece 20 depending upon the current or projected status thereof. For example, if a delay has occurred in the handling of the mailpiece 20, the recipient could elect for subsequent expedited handling the mailpiece 20. If a mailpiece 20 is being held at a particular station 52 for inspection (e.g., due to possible contamination of the mailpiece 20), the recipient could elect for the delivery of a scanned copy (uncontaminated) of the mailpiece contents. The recipient could redirect the mailpiece 20 to an alternate address, e.g., should it be realized that delivery to such address is more convenient. In furtherance of the discussion concerning the use of the Internet, it will be appreciated that Internet communication could also be employed to provide handling instructions to the delivery agent 14. The options and variations are only limited by the willingness and/or ability of the delivery agent 14 to respond to changes/instructions.

Alternatively, and in accordance with yet another embodiment of the invention, a predefined set of instructions could be provided in combination with the mailpiece 20 in the event of a delay or other unanticipated event. For example, a Radio Frequency ID (RFID) tag 72 (See Fig. 2) could be disposed in combination with the mailpiece 20 for carrying various information and instructions concerning the mailpiece 20. That is, information can be stored on the RFID tag 72, e.g., instructions in the event of a delay, and read at any time by the delivery agent 14. The RFID tag 72 could also be used as the mail identifier 22 discussed previously. Consequently, the tag 72 can be multifunctional, serving as the mail identifier 22, providing contact information 60 and/or alternate instructions to the delivery agent 14. It should also be noted that the RFID could be placed within the envelope.

While the method of communication between delivery agent 14 and the recipient 18 of a mailpiece 20 has been discussed in terms of remote access (e.g., through a personal computer using electronic mail or Internet connection), a dedicated communication network may also be employed.. For example, a dedicated network of mail kiosks (not shown) may be established at various locations (e.g., Post Offices, Malls, or other high traffic locations) for the express or dedicated purpose of accepting, tracking, and delivering mailpieces. As such, the mail kiosk may employ a user interface capable of displaying delivery report information. The mail kiosk may also be capable of offering other delivery/rerouting options or accepting alternate delivery instructions. Consequently, the recipient could use such mail kiosk to view the progress of a particular mailpiece and provide alternate instructions regarding its handling.

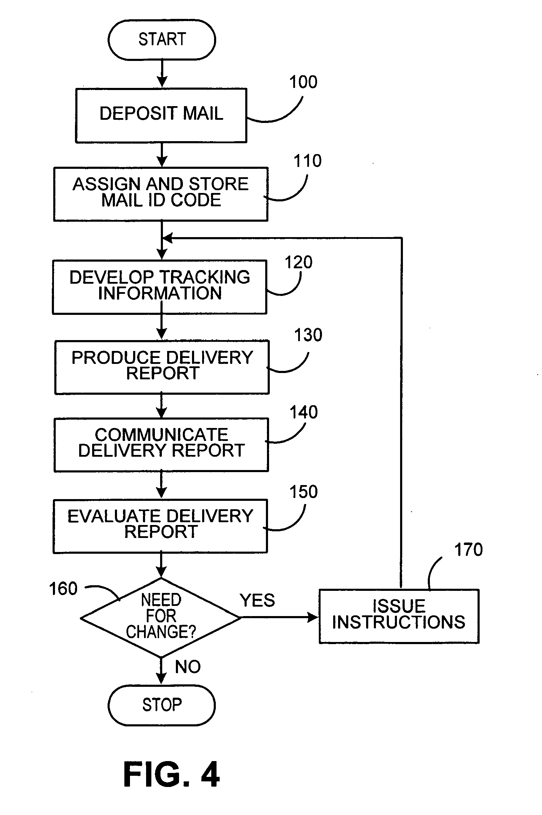

Referring to FIG. 1 and FIG. 4, which shows flow diagram summarizing the various method steps, the mailpiece 20 enters the mail distribution system 10 at step 100 and a mailpiece identifier 22 is disposed in combination with the mailpiece 20. At step 110 the mailpiece identifier 22 is read and an identification code is stored in a computer database 34. If there is no identifier on the mailpiece an identifier may be printed by the processing station 52, most likely the initial processing station. As the mailpiece 20 is routed to the various mail stations 52, tracking information is developed/captured by a plurality of mail readers 38, identified as step 120 in FIG. 4. It should be noted that processing stations include not only traditional mail sorting equipment but all other devices that may acquire data regarding a mailpiece during processing. Examples include: tray label scanning systems (barcode and RFID), airline container tracking systems, handheld scanners carried by delivery personnel, etc. The mail readers 38 are disposed at predetermined locations within the mail distribution system 10 and issue an identification signal 36 unique to each mailpiece 20. The data processor 32 is responsive to the identification signals 36 and stores handling information unique to each mail reader. Furthermore, at step 130, the data processor produces the delivery report 50 indicative of the handling information associated with each mailpiece 20, i.e., using the mailpiece identification code 22. At step 140, the delivery report 50 is communicated, via a communication network 70 to the recipient 18 of the mailpiece 20.

As mentioned supra, contact information 60 may be provided in combination with the mailpiece 20 and communications will preferably be conducted via an electronic method of communication such as by way of e-mail, an Internet communication network, facsimile and/or telephone. It should also be appreciated that the contact information could be previously collected in a database and be retrieved directly from recipient information printed on the mailpiece.

The recipient will, at step 150, evaluate the delivery report 50 to determine if any changes should be made or invoked. The types of actions and events which may give rise to a handling change have been discussed earlier and, consequently, will not be reiterated again. Suffice to say that a decision is made at step 160, and instructions communicated to the delivery agent 14 at step 170 to, in some fashion, change the handling of the mailpiece 20. Inasmuch as the changes will give rise to yet additional tracking information, the flow diagram returns to step 120 to continue further development of mailpiece tracking information. It should also be noted that instructions could also be communicated to any person or piece of equipment that will process the mailpiece. For example, if the delivery report information is communicated to the recipient while the mail is still in process any processing station 52 which might handle the mailpiece could be instructed to outsort the mailpiece.

Should the recipient be unable to intervene and introduce alternate instructions, i.e., perform the evaluation step while the mailpiece is in the mail distribution system, a predetermined set of instructions can be provided by way of the RFID tag 72 discussed earlier. Accordingly, a degree of artificial intelligence can be introduced without the need to communicate with the recipient. Notwithstanding, a delivery report 50 is still generated and forwarded with the mailpiece upon delivery.

The teachings of the present invention provide the recipient or other authorized agent with enhanced flexibility in prescribing the handling of and/or other actions with respect to the mailpiece. The recipient is able to track the progress of a mailpiece and intervene as necessary to change the handling instructions. For example, the recipient can change the class of service (e.g., from Priority Service to Overnight Delivery), can refuse the delivery of a particular mailpiece (i.e., if it is suspected that the mailpiece may contain or have come in contact with a hazardous material), or redirect the mailpiece to another destination.

Moreover, depending upon the willingness of the delivery agent, a recipient can request that a scanned electronic copy be transmitted should a delay in delivery occur. Finally, various communication channels are available to receive and send communications between the delivery agent and the mailpiece recipient. For example, Internet communications, which are becoming more sophisticated and secure, may be an ideal channel for communicating a delivery report and accepting instructions from the mailpiece recipient. Predetermined instructions may also be communicated by way of the RFID tag discussed hereinabove. As a result, the invention may provide both the sender and recipient with an opportunity to track and manage mailing/shipping operations, even in the case of unplanned events that disrupt the delivery process.

## Claims

1. A system for delivering a mailpiece in a mail distribution system, comprising:
a mailpiece identifier disposed in combination with the mailpiece;
a plurality of mail readers, disposed at predetermined locations within the mail distribution system, for reading the mail identifier and issuing an identification signal unique to each mailpiece;
a data processor, responsive to the identification signal, for generating a database of mailpiece identification codes, for storing handling information unique to each mail reader, and for producing a delivery report indicative of the handling information associated with each mailpiece through its identification code; and
a communication network for communicating the delivery report to a recipient of the mailpiece.

2. The system according to claim 1, further comprising indicia disposed in combination with the mailpiece indicative of an electronic method of communication, the communication method from the family of:
e-mail, internet, facsimile, and telephone.

3. The system according to claim 1, wherein the communication device is from the family of:
electronic mail, Internet, facsimile, telephone communication.

4. The system according to claim 1 further including a Radio Frequency IDentification (RFID) tag disposed in combination with the mailpiece.

5. The system according to claim 4 wherein the RFID tag includes stored information for communicating contact information to a delivery agent.

6. The system according to claim 4, wherein the tracking information includes mailpiece handling information relating to an action taken with respect to the mailpiece at each location.

7. The system according to claim 1 wherein the tracking information includes mailpiece-handling information relating to the time and location of a mailpiece.

8. The system according to claim 1 wherein the delivery report communicates tracking information for multiple mailpieces.

9. The system according to claim 8 wherein the multiple mailpieces originate from multiple senders.

10. A method for delivering a mailpiece, comprising the steps of:
reading a mailpiece identifier disposed in combination with the mailpiece during mailpiece processing,
developing tracking information corresponding to various mailpiece processing activities in the mail distribution system,
producing a delivery report based upon the tracking information; and
communicating the delivery report to a recipient of the mailpiece.

11. The method according to claim 10 further comprising the steps of:
providing contact information in combination with the mailpiece to facilitate communication between a delivery agent and the mailpiece recipient; and
communicating the delivery report to the recipient as tracking information is developed.

12. The method according to claim 11 wherein the contact information is stored on a Radio Frequency IDentification (RFID) tag disposed in combination with the mailpiece.
